# EUROPÄISCHE PATENTSCHRIFT

(11) **EP 2 330 307 B1**
(45) Veröffentlichungstag und Bekanntmachung des Hinweises auf die Patenterteilung: **01.04.2015**
(21) Anmeldenummer: 10007683.5
(22) Anmeldetag: 23.07.2010
(51) Int. Cl.: F16C 7/08

(54) **Lagerelement und Verfahren zu dessen Herstellung**
Bearing support element and method for its production
Elément de support pour palier et son procédé de fabrication

(30) Priorität: 02.12.2009 DE 202009016416 U
(43) Veröffentlichungstag der Anmeldung: 08.06.2011
(73) Patentinhaber: Fischer & Kaufmann GmbH & Co. KG, 57413 Finnentrop (DE)
(72) Erfinder: Schröder, Meinolf, 57413 Finnentrop (DE); Bischopink, Hugo, 57413 Finnentrop (DE)
(74) Vertreter: Wunderlich, Rainer

(56) Entgegenhaltungen:
- DE-A1- 3 801 802
- DE-A1-102006 060 897
- FR-A1- 2 706 096
- US-A- 5 492 001
- US-A1- 2003 037 637

## Beschreibung

Die Erfindung betrifft ein Lagerelement mit einem Grundkörper aus einem Blech und mindestens einer hülsenförmigen Aufnahme, welche einstückig an dem Grundkörper durch Tiefziehen des Bleches ausgebildet ist, wobei ein Übergangsbereich zwischen der hülsenförmigen Aufnahme und dem Grundkörper gebildet ist, gemäß dem Oberbegriff des Anspruchs 1 sowie ein Verfahren gemäß dem Oberbegriff des Anspruchs 8.

Aus der gattungsbildenden DE-A 38 01 802 geht eine Pleuelstange aus einem Blech hervor, an welcher eine zylindrische Aufnahme spanlos angeformt ist. Derartige Lagerelemente können in vielfältigster Weise auf sehr unterschiedlichen Gebieten, insbesondere dem Fahrzeug- oder Maschinenbau, eingesetzt werden. So ist etwa aus der DE-U 203 17 345 ein gattungsgemäßes Lagerelement bekannt, welches als Kopplungsstange zur Verbindung eines Motors und/oder eines Getriebes mit einem Chassis eines Kraftfahrzeuges ausgebildet ist.

Üblicherweise werden derartige Lagerelemente als massive Guss- oder Schmiedeteile gefertigt. Allerdings sind derart hergestellte Massivteile vergleichsweise schwer sowie material- und herstellungskostenintensiv.

Dem gegenüber bietet ein aus einem Blech durch Umformen gefertigtes Lagerelement Kostenvorteile in der Fertigung sowie eine Material- und Gewichtseinsparung, was insbesondere im Fahrzeugbau von immer größerer Bedeutung ist.

Das in der DE-U 203 17 345 beschriebene stangenförmige Lagerelement weist zwei hülsenförmige Aufnahmen auf, welche durch Tiefziehen an einem Blechgrundkörper ausgebildet sind. Die hülsenförmigen Aufnahmen dienen zum Haltern von Lagerbuchsen oder anderen Lagerbauteilen, so dass die hülsenförmigen Aufnahmen eine nötige Stabilität und Festigkeit aufweisen müssen

Aus der US-A 5 492 001 sind ein Verfahren und eine Vorrichtung bekannt, mit welchen ein vorstehender Grat an einer relativ dicken Metallplatte bearbeitet werden kann. Dabei wird vorgeschlagen, den bei einem Stanzen entstehenden Grat zu stauchen.

Der Erfindung liegt die **Aufgabe** zugrunde, ein Lagerelement und ein Herstellungsverfahren anzugeben, bei welchen bei einer weiterhin hohen oder sogar einer verbesserten Festigkeit der hülsenförmigen Aufnahme ein besonders effizienter Materialeinsatz gegeben ist.

Die Aufgabe wird nach der Erfindung zum einen durch ein Lagerelement mit den Merkmalen des Anspruchs 1 gelöst. Bevorzugte Ausführungsformen sind in den abhängigen Ansprüchen angegeben.

Nach der Erfindung ist das Lagerelement dadurch gekennzeichnet, dass der Übergangsbereich durch ein Stauchen der hülsenförmigen Aufnahme eckig ausgebildet ist.

Ein Grundgedanke der Erfindung beruht auf der Erkenntnis, dass die hülsenförmigen Aufnahmen zum Haltern von entsprechend ringförmig, buchsenförmig oder zylindrisch ausgebildeten Bauteilen dienen, wobei diese etwa durch Einpressen in die Aufnahmen gehaltert werden. Für eine ausreichende Befestigung spielt die Kontaktfläche zwischen der hülsenförmigen Aufnahme und dem eingefügten Lagerbauteil eine maßgebliche Rolle. Beim herkömmlichen Tiefziehen der hülsenförmigen Lagerelemente an einem Blech sind jedoch im Übergangsbereich zwischen dem Grundkörper und der hülsenförmigen Aufnahme fertigungsbedingte Tiefziehradien gegeben. Diese bogenförmigen Übergangsbereiche können üblicherweise nicht als Kontaktfläche zur Halterung des einzufügenden Bauteiles verwendet werden und führen so zu einer Vergrößerung der axialen Länge der hülsenförmigen Aufnahme.

Im erfindungsgemäßen Lagerelement ist der Übergangsbereich eckig ausgebildet, wobei dies durch ein Rückstauchen entgegen der Ziehrichtung bewirkt wird. Das Ausformen der eckigen Übergangsbereiche erfolgt also spanlos, so dass hierdurch kein Materialabfall entsteht. Zudem wird das Materialgefüge in dem Übergangsbereich durch dieses Stauchen zusätzlich kalt verfestigt, so dass ein hochfester Übergangsbereich und damit eine besonders stabile hülsenförmige Aufnahme erreicht sind.

Im Vergleich zu herkömmlichen Lagerelementen wird so eine besonders stabile hülsenförmige Aufnahme mit einem verringerten Materialeinsatz erzielt. Dabei ist anzumerken, dass der Begriff des Lagerelementes im Sinne der Erfindung weit aufzufassen ist und insbesondere hülsenförmige Aufnahmen zum Haltern von Dreh- oder Linearlagern, wie Wälzlagern oder Gleitbuchsen, umfassen. Die Lagerelemente können unterschiedlichste Formen hinsichtlich der Gestalt des Grundkörpers aufweisen, wobei stangenförmige und plattenförmige Gestaltungen bevorzugt sind. Die erfindungsgemäß hergestellten Bauteile können auch selbst zur Lagerung oder als ein Verbindungsglied dienen.

Nach der Erfindung muss der eckige Übergangsbereich nicht zwingend scharfkantig ausgebildet sein. Beim Stauchen kann auch ein gewisses Anfasen des Eckbereiches erfolgen. Nach der Erfindung ist es besonders vorteilhaft, dass der eckige Übergangsbereich einen Eckradius aufweist, welcher kleiner als ein Tiefziehradius zum Bilden der hülsenförmigen Aufnahme aus dem Blech ist. Damit können insbesondere Lager mit Kunststoff- oder Gummiaußenringen schonend in die Aufnahme eingeführt werden.

Dabei ist es nach der Erfindung besonders vorteilhaft, dass der Eckradius kleiner als die Dicke des Bleches, insbesondere kleiner gleich 1 mm ist. Hierdurch wird ein guter Materialeinsatz, eine ausreichende Kaltverfestigung im Übergangsbereich sowie ein weiterhin noch so gestalteter Randbereich erzielt, dass ein zuverlässiges Einfügen eines Lagerbauteiles in die hülsenförmigen Aufnahme noch gewährleistet ist.

Eine weitere Erhöhung der Bauteilfestigkeit wird nach der Erfindung dadurch erreicht, dass an dem Grundkörper eine hochgestellte Seitenwand ausgebildet ist, welche beabstandet zur hülsenförmigen Aufnahme angeordnet ist und diese zumindest teilweise umgibt. Durch das spanlose Bilden des Seitenrandes, insbesondere durch Umbiegen oder Tiefziehen, wird der Blechgrundkörper zusätzlich stabilisiert und versteift. Durch das Hochstellen des Seitenrandes am Blechgrundkörper, insbesondere im Bereich der Aufnahme, wird auch die Stabilität der Aufnahme verbessert.

Es ist dabei nach der Erfindung vorgesehen, dass in einem Abstandsbereich zwischen der hülsenförmigen Aufnahme und der Seitenwand mindestens ein Stützelement angeordnet ist, welches die hülsenförmige Aufnahme und die Seitenwand stützend verbindet. Auf diese Weise kann die hülsenförmige Aufnahme gegenüber der Seitenwand abgestützt und damit zusätzlich stabilisiert werden.

Nach der Erfindung besteht eine vorteilhafte Ausführungsform darin, dass das Stützelement ringförmig mit einer Mittenöffnung ausgebildet ist, in welcher die hülsenförmige Aufnahme angeordnet ist.

Dabei kann vorgesehen sein, dass das Stützelement kraftschlüssig, insbesondere durch Einpressen, und/oder stoffschlüssig, insbesondere durch Verschweißen, befestigt ist. Bei einem ringförmigen Stützelement ist die Seitenwand zumindest teilringförmig um die hülsenförmige Aufnahme angeordnet, wobei das Stützelement unter Bildung einer Presspassung in den Abstandsbereich zwischen der hülsenförmigen Aufnahme und der Seitenwand eingefügt werden kann. So kann eine einfache fertigungstechnische Versteifung erfolgen, wobei abhängig vom Einsatz des Lagerelementes auch eine Verschweißung durch ein oder mehrere Schweißpunkte erfolgen kann.

Eine alternative Möglichkeit besteht nach der Erfindung darin, dass das Stützelement als ein Verbindungssteg ausgebildet ist, welcher an einem Teilumfang der hülsenförmigen Aufnahme anliegt. Es können so eine oder mehrere schmale Verbindungsstege als brückenartige Stützelemente am Außenumfang der hülsenförmigen Aufnahme angeordnet werden.

Grundsätzlich können die Verbindungsstege als separate Teile gefertigt und durch Einpressen oder durch Verschweißen befestigt werden. Nach der Erfindung ist es jedoch besonders bevorzugt, dass der Verbindungssteg einstückig an dem Blech ausgebildet ist und insbesondere von der Seitenwand durch Biegen an die hülsenförmige Aufnahme angelegt ist. Die Verbindungsstege werden dabei einstückig an dem Blech ausgebildet und aus einem Ausgangsblechwerkstück mit einer vorgegebenen Grundform ausgestanzt. Nach den notwendigen Umform- und Tiefziehvorgängen kann der mindestens eine Verbindungssteg entweder an der ausgebildeten hülsenförmigen Aufnahme oder vorzugsweise an der Seitenwand ausgebildet sein und anschließend auf das gegenüberliegende Element, insbesondere von der Seitenwand auf die hülsenförmige Aufnahme umgelegt werden. Es können am freien Rand der hülsenförmigen Aufnahme und/oder der Seitenwand Ausnehmungen eingebracht sein, in welche der Verbindungssteg kraft- und/oder formschlüssig eingefügt ist. Soweit notwendig kann mittels Schweißen eine zusätzliche Befestigung an der Anlagestelle erfolgen.

Die Erfindung umfasst zur Lösung der Aufgabe auch ein Verfahren zum Herstellen des Lagerelementes nach Anspruch 8. Bei diesem Verfahren wird aus einem Blech ein Grundkörper geformt, an welchem eine hülsenförmige Aufnahme einstückig tiefgezogen wird, wobei ein Übergangsbereich zwischen der hülsenförmigen Aufnahme und dem Grundkörper gebildet wird. Anschließend an das Tiefziehen wird die hülsenförmige Aufnahme gestaucht, wobei der Übergangsbereich eckig ausgebildet wird. Abwandlungen des Verfahrens ergeben sich aus vorstehender Beschreibung zum Lagerelement.

Die Erfindung wird nachfolgend anhand von bevorzugten Ausführungsbeispielen weiter beschrieben, welche schematisch in den beiliegenden Zeichnungen dargestellt sind. In den Zeichnungen zeigen:
- Fig. 1: eine ausschnittsweise Draufsicht eines Ausführungsbeispieles eines Lagerelements, das nicht alle Merkmale der Erfingung zeigt;
- Fig. 2: eine schematische Querschnittsansicht zu dem Lagerelement zu Fig. 1;
- Fig. 3: eine Querschnittsansicht zu einer erfindungsgemäßen Ausführungsform mit ringförmigem Stützelement; und
- Fig. 4: eine schematische Querschnittsansicht zu einer abgewandelten Ausführungsform mit Verbindungssteg.

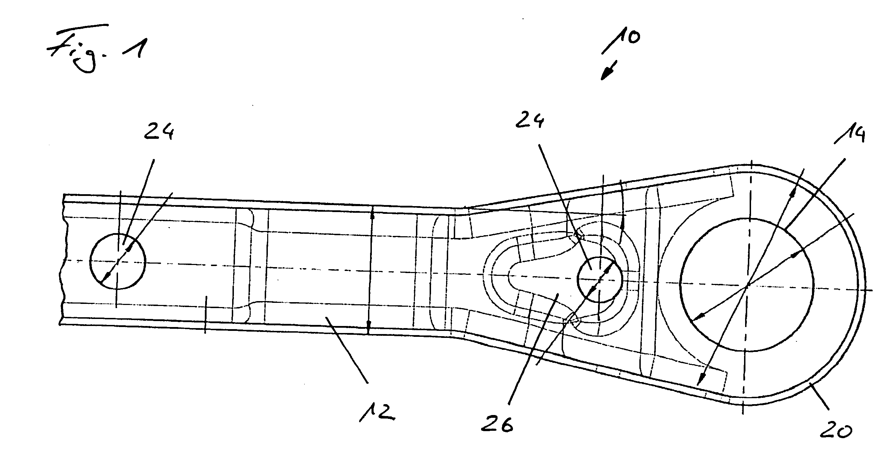

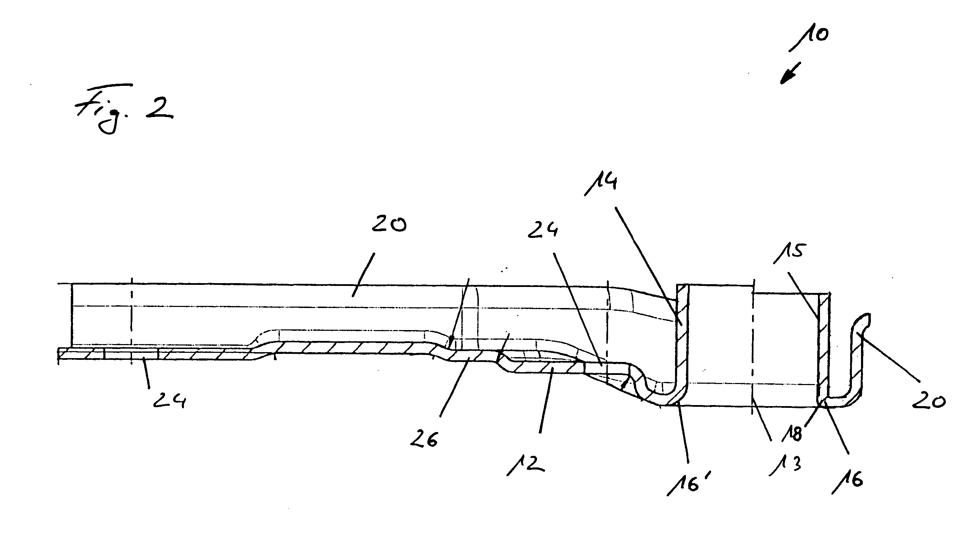

Im Zusammenhang mit den Figuren 1 und 2 ist ein erstes Ausführungsbeispiel eines Lagerelementes 10, das nicht alle erfingungsgemäßen Merkmale aufweist, dargestellt, welches als ein stangen- oder hebelförmiges Kopplungselement ausgebildet ist, wie es beispielsweise zur Lagerung von Komponenten am Chassis eines Fahrzeuges verwendet wird. Das aus einem Blech aus einem Umformstahl einstückig hergestellte Lagerelement 10 umfasst einen länglichen Grundkörper 12, in welchem durch Tiefziehen oder einem vergleichbaren Umformverfahren eine hülsenförmige Aufnahme 14 geformt ist. Zur Versteifung des Blechwerkstückes ist der Außenrand zum Bilden einer etwa rechtwinklig zum Grundkörper 12 vorstehenden Seitenwand 20 hochgestellt. Zusätzlich ist der aus einem ebenen Blech hergestellte Grundkörper 12 durch Einprägungen 26 konturiert, was durch eine Kaltverfestigung und eine entsprechende Formgebung zur weiteren Versteifung des Lagerelementes 10 beiträgt. Weiterhin sind kreisförmige Ausstanzungen 24 vorgesehen, welche einerseits der Verringerung des Bauteilgewichtes und andererseits zur Aufnahme zusätzlicher Bauteilkomponenten dienen können.

Die hülsenförmige Aufnahme 14 dient zum Aufnehmen und Haltern etwa von Lagerbauteilen, wie Wälzlagern, Buchsen oder Gummimuffen. Für die Halterung dieser aufzunehmenden Lagerbauteile ist die Innenfläche 15 maßgeblich, welche sich koaxial zur Mittenachse 13 der hülsenförmigen Aufnahme 14 erstreckt. Die hülsenförmige Aufnahme 14 ist über einen Übergangsbereich 16 mit dem Grundkörper 12 des Lagerelementes 10 verbunden.

In Fig. 2 ist in der linken Hälfte der Übergangsbereich 16' dargestellt, wie er sich unmittelbar nach dem Tiefziehen der hülsenförmigen Aufnahme 14 ergibt. Aus fertigungstechnischen Gründen ist entsprechend der Umformmatrize ein relativ großer Tiefziehradius vorgesehen, welcher nicht als Kontaktfläche zum einzusetzenden Lagerbauteil verwendet werden kann und somit die axiale Länge der hülsenförmigen Aufnahme 14 grundsätzlich verlängert, wie in der linken Hälfte der hülsenförmigen Aufnahme 14 in Fig. 2 dargstellt ist. Nach der Erfindung wird der Übergangsbereich 16 eckig ausgebildet, in dem die hülsenförmige Aufnahme 14 entgegen der Tiefziehrichtung um ein vorgegebenes Maß rückgestaucht wird, wie in der rechten Hälfte zur Aufnahme 14 in Fig. 2 dargestellt ist.

Dabei wird ein Eckradius 18 erzeugt, welcher erheblich kleiner als der vorausgegangene Tiefziehradius ist und kleiner als die Dicke des Bleches ist. Durch dieses Rückstauchen verringert sich die axiale Länge der hülsenförmigen Aufnahme 14 bei gleicher oder sogar vergrößerter koaxialer Innenfläche 15 zum Haltern eines einzubauenden Lagerbauteiles. Zudem bewirkt die Rückstauchung in dem Übergangsbereich 16 eine Kaltverfestigung, so dass insbesondere dieser am größten belastete Übergangsbereich 16 zusätzlich verfestigt und stabilisiert ist. Somit erhöht sich bei einem verbesserten Materialeinsatz sogar die Bauteilfestigkeit.

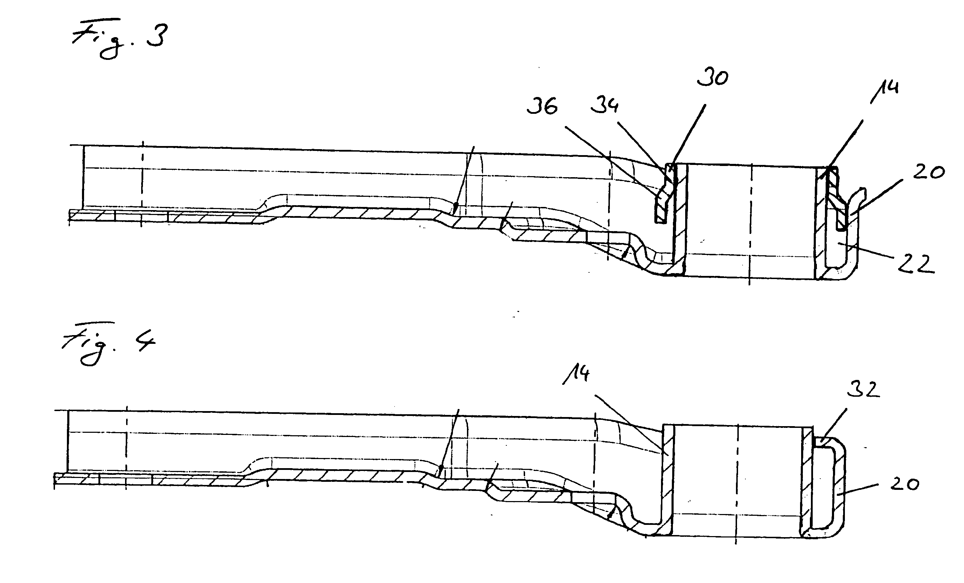

Gemäß der Ausführungsform von Fig. 3 wird bei einem erfindungsgemäßen Lagerelement 10 die Stabilität der hülsenförmigen Aufnahme 14 noch dadurch erhöht, dass die Seitenwand 20 die hülsenförmige Aufnahme 14 zumindest teil- oder zumindest halbkreisförmig mit einem definierten, gleichbleibenden Abstandsbereich 22 umgibt. In diesem Abstandsbereich 22 ist ein ringförmiges Stützelement 30 eingepresst, welches die Innenseite der Seitenwand 20 mit der Außenseite der hülsenförmigen Aufnahme 14 verbindet. Hierdurch wird eine Abstützung insbesondere des freien Randes der hülsenförmigen Aufnahme 14 erreicht, so dass insgesamt erhöhte Lagerkräfte von der hülsenförmigen Aufnahme 14 aufgenommen werden können.

In der dargestellten Ausführungsform von Fig. 3 ist das ringförmige Stützelement 30 als ein konusförmiges Element mit einer Stufenkontur ausgebildet. Ein Innenringbereich 34 ist an die Außenkontur der hülsenförmigen Aufnahme 14 angepasst. Ein Außenringbereich 36 ist an die Innenkontur der konzentrischen Seitenwand 20 angepasst, so dass insgesamt eine Presspassung gegeben ist. Vorzugsweise ist, wie im dargestellten Ausführungsbeispiel, die Kontur kreisförmig. Diese kann jedoch auch quadratisch oder eine andere polygonale Form aufweisen.

Gemäß Fig. 4 ist eine Alternative zur Versteifung der hülsenförmigen Aufnahme 14 dargestellt. Hierzu wird zumindest bereichsweise der Außenrand der Seitenwand 20 an die Außenseite der hülsenförmigen Aufnahme 14 unter Bildung eines Verbindungsstegs 32 umgelegt. Es erfolgt so ebenfalls ein Abstützen des freien Randes der hülsenförmigen Aufnahme 14, so dass insgesamt die Steifigkeit erhöht wird. Zur Erhöhung der Festigkeit kann im Kontaktbereich zwischen dem brückenartigen Verbindungssteg 32 und der hülsenförmigen Aufnahme 14 eine Schweißverbindung vorgesehen sein. sen ist und insbesondere hülsenförmige Aufnahmen zum Haltern von Dreh- oder Linearlagern, wie Wälzlagern oder Gleitbuchsen, umfassen. Die Lagerelemente können unterschiedlichste Formen hinsichtlich der Gestalt des Grundkörpers aufweisen, wobei stangenförmige und plattenförmige Gestaltungen bevorzugt sind. Die erfindungsgemäß hergestellten Bauteile können auch selbst zur Lagerung oder als ein Verbindungsglied dienen.

Nach der Erfindung muss der eckige Übergangsbereich nicht zwingend scharfkantig ausgebildet sein. Beim Stauchen kann auch ein gewisses Anfasen des Eckbereiches erfolgen. Nach der Erfindung ist es besonders vorteilhaft, dass der eckige Übergangsbereich einen Eckradius aufweist, welcher kleiner als ein Tiefziehradius zum Bilden der hülsenförmigen Aufnahme aus dem Blech ist. Damit können insbesondere Lager mit Kunststoff- oder Gummiaußenringen schonend in die Aufnahme eingeführt werden.

Dabei ist es nach der Erfindung besonders vorteilhaft, dass der Eckradius kleiner als die Dicke des Bleches, insbesondere kleiner gleich 1 mm ist. Hierdurch wird ein guter Materialeinsatz, eine ausreichende Kaltverfestigung im Übergangsbereich sowie ein weiterhin noch so gestalteter Randbereich erzielt, dass ein zuverlässiges Einfügen eines Lagerbauteiles in die hülsenförmigen Aufnahme noch gewährleistet ist.

Eine weitere Erhöhung der Bauteilfestigkeit wird nach der Erfindung dadurch erreicht, dass an dem Grundkörper eine hochgestellte Seitenwand ausgebildet ist, welche beabstandet zur hülsenförmigen Aufnahme angeordnet ist und diese zumindest teilweise umgibt. Durch das spanlose Bilden des Seitenrandes, insbesondere durch Umbiegen oder Tiefziehen, wird der Blechgrundkörper zusätzlich stabilisiert und versteift. Durch das Hochstellen des Seitenrandes am Blechgrundkörper, insbesondere im Bereich der Aufnahme, wird auch die Stabilität der Aufnahme verbessert.

Es ist dabei nach der Erfindung vorgesehen, dass in einem ist dabei nach der Erfindung, dass in einem Abstandsbereich zwischen der hülsenförmigen Aufnahme und der Seitenwand mindestens ein Stützelement angeordnet ist, welches die hülsenförmige Aufnahme und die Seitenwand stützend verbindet. Auf diese Weise kann die hülsenförmige Aufnahme gegenüber der Seitenwand abgestützt und damit zusätzlich stabilisiert werden.

## Patentansprüche

1. Lagerelement mit einem Grundkörper (12) aus einem Blech und mindestens einer hülsenförmigen Aufnahme (14), welche einstückig an dem Grundkörper (12) durch Tiefziehen des Bleches ausgebildet ist, wobei ein Übergangsbereich (16) zwischen der hülsenförmigen Aufnahme (14) und dem Grundkörper (12) gebildet ist,
**dadurch gekennzeichnet,**
dass der Übergangsbereich (16) durch Stauchen der hülsenförmigen Aufnahme (14) eckig ausgebildet ist,
dass an dem Grundkörper (12) eine hochgestellte Seitenwand (20) ausgebildet ist, welche beabstandet zur hülsenförmigen Aufnahme (14) angeordnet ist und diese zumindest teilweise umgibt, wobei ein Abstandsbereich (22) gebildet ist, und
dass in dem Abstandsbereich (22) zwischen der hülsenförmigen Aufnahme (14) und der Seitenwand (20) mindestens ein Stützelement (30) angeordnet ist, welches die hülsenförmige Aufnahme (14) und die Seitenwand (20) stützend verbindet.

2. Lagerelement nach Anspruch 1,
**dadurch gekennzeichnet**,
dass der eckige Übergangsbereich (16) einen Eckradius (18) aufweist, welcher kleiner als ein Tiefziehradius zum Bilden der hülsenförmigen Aufnahme (14) aus dem Blech ist.

3. Lagerelement nach Anspruch 2,
dadurch **gekennzeichnet**,
dass der Eckradius (18) kleiner als die Dicke des Bleches, insbesondere kleiner gleich 1 mm ist.

4. Lagerelement nach einem der Ansprüche 1 bis 3,
dadurch **gekennzeichnet**,
dass das Stützelement (30) ringförmig mit einer Mittenöffnung ausgebildet ist, in welcher die hülsenförmige Aufnahme (14) angeordnet ist.

5. Lagerelement nach einem der Ansprüche 1 bis 4,
dadurch **gekennzeichnet**,
dass das Stützelement (30) kraftschlüssig, insbesondere durch Einpressen, und/oder stoffschlüssig, insbesondere durch Verschweißen, befestigt ist.

6. Lagerelement nach Anspruch 5,
dadurch **gekennzeichnet,**
dass das Stützelement (30) als ein Verbindungssteg (32) ausgebildet ist, welcher an einem Teilumfang der hülsenförmigen Aufnahme (14) anliegt.

7. Lagerelement nach Anspruch 6,
dadurch **gekennzeichnet,**
dass der Verbindungssteg (32) einstückig an dem Blech ausgebildet ist und insbesondere von der Seitenwand (20) durch Biegen an die hülsenförmige Aufnahme (14) angelegt ist.

8. Verfahren zum Herstellen eines Lagerelements (10), insbesondere nach einem der Ansprüche 1 bis 7, mit einem Grundkörper (12) aus einem Blech, wobei mindestens eine hülsenförmige Aufnahme (14) einstückig an dem Grundkörper (12) tiefgezogen und ein Übergangsbereich (16) zwischen der hülsenförmigen Aufnahme (14) und dem Grundkörper (12) gebildet wird, dadurch **gekennzeichnet**,
**dass** anschließend der Übergangsbereich (16) der hülsenförmigen Aufnahme (14) gestaucht und dabei eckig ausgebildet wird,
dass an dem Grundkörper (12) eine hochgestellte Seitenwand (20) ausgebildet wird, welche beabstandet zur hülsenförmigen Aufnahme (14) angeordnet ist und diese zumindest teilweise umgibt, wobei ein Abstandsbereich (22) gebildet wird, und
dass in dem Abstandsbereich (22) zwischen der hülsenförmigen Aufnahme (14) und der Seitenwand (20) mindestens ein Stützelement (30) angeordnet wird, welches die hülsenförmige Aufnahme (14) und die Seitenwand (20) stützend verbindet.

## Claims

1. Bearing element having a base body (12) made of a sheet metal and at least one sleeve-shaped receiving part (14) which is designed in one piece on the base body (12) by deep-drawing of the sheet metal, wherein a transition region (16) is formed between the sleeve-shaped receiving part (14) and the base body (12),
**characterized** in that
the transition region (16) is designed in an angular manner by upsetting the sleeve-shaped receiving part (14),
on the base body (12) an elevated side wall (20) is designed which is spaced from the sleeve-shaped receiving part (14) and surrounds it at least partially, wherein a distance region (22) is formed, and
in that in the distance region (22) between the sleeve-shaped receiving part (14) and the side wall (20) at least one support element (30) is arranged which connects the sleeve-shaped receiving part (14) and the side wall (20) in a supporting manner.

2. Bearing element according to claim 1,
**characterized** in that
the angular transition region (16) has a flanging radius (18) which is smaller than a deep-drawing radius for forming the sleeve-shaped receiving part (14) of the sheet metal.

3. Bearing element according to claim 2,
**characterized** in that
the flanging radius (18) is smaller than the thickness of the sheet metal, in particular being smaller than or equal to 1 mm.

4. Bearing element according to any one of claims 1 to 3,
**characterized** in that
the support element (30) is of ring-shaped design with a central opening, in which the sleeve-shaped receiving part (14) is arranged.

5. Bearing element according to any one of claims 1 to 4,
**characterized** in that
the support element (30) is fixed in a force-fitting manner, in particular through pressing-in, and/or in a material-bonding manner, in particular through welding.

6. Bearing element according to claim 5,
**characterized** in that
the support element (30) is designed as a connecting web (32) which rests against a part of the circumference of the sleeve-shaped receiving part (14).

7. Bearing element according to claim 6,
**characterized** in that
the connecting web (32) is designed in one piece on the sheet metal and is in particular applied from the side wall (20) to the sleeve-shaped receiving part (14) through bending.

8. Method for producing a bearing element (10), in particular according to any one of claims 1 to 7, with a base body (12) made of a sheet metal,
wherein at least one sleeve-shaped receiving part (14) is deep-drawn in one piece on the base body (12) and a transition region (16) is formed between the sleeve-shaped receiving part (14) and the base body (12),
**characterized** in that
subsequently the transition region (16) of the sleeve-shaped receiving part (14) is upset and thereby designed angularly,
on the base body (12) an elevated side wall (20) is designed which is spaced from the sleeve-shaped receiving part (14) and surrounds it at least partially, wherein a distance region (22) is formed, and
in that in the distance region (22) between the sleeve-shaped receiving part (14) and the side wall (20) at least one support element (30) is arranged which connects the sleeve-shaped receiving part (14) and the side wall (20) in a supporting manner.

## Revendications

1. Elément de support avec un corps de base (12) à partir d'une feuille métallique et avec au moins un réceptacle en forme de manchon (14) qui est constitué d'une seule pièce sur le corps de base (12) par emboutissage de la feuille métallique, une région de transition (16) étant formée entre le réceptacle en forme de manchon (14) et le corps de base (12),
caractérisé :
en ce que la région de transition (16) est constituée de manière anguleuse par refoulement du réceptacle en forme de manchon (14),
en ce que, sur le corps de base (12), une paroi latérale coudée vers le haut (20) est constituée, qui est espacée par rapport au réceptacle en forme de manchon (14) et qui entoure celui-ci au moins en partie, une région d'espacement (22) étant ainsi formée, et
en ce que, dans la région d'espacement (22), entre le réceptacle en forme de manchon (14) et la paroi latérale (20), au moins un élément de maintien (30) est disposé, celui-ci reliant en les maintenant le réceptacle en forme de manchon (14) et la paroi latérale (20).

2. Elément de support selon la revendication 1,
caractérisé :
en ce que la région de transition (16) anguleuse comporte un rayon de courbure (18) qui est plus faible qu'un rayon d'emboutissage pour la formation du réceptacle en forme de manchon (14) à partir de la feuille métallique.

3. Elément de support selon la revendication 2,
caractérisé :
en ce que le rayon de courbure (18) est plus faible que l'épaisseur de la feuille métallique, et plus particulièrement inférieur ou égal à 1 mm.

4. Elément de support selon une des revendications 1 à 3,
caractérisé :
en ce que l'élément de maintien (30) est constitué en étant de forme annulaire avec une ouverture centrale dans laquelle le réceptacle en forme de manchon (14) est disposé.

5. Elément de support selon une des revendications 1 à 4,
caractérisé :
en ce que l'élément de maintien (30) est fixé par une action d'adhérence, en particulier par injection et/ou par liaison de matière, plus particulièrement par soudage.

6. Elément de support selon la revendication 5,
caractérisé :
en ce que l'élément de maintien (30) est constituée à la manière d'une collerette de liaison (32), qui est placée sur une partie de la périphérie du réceptacle en forme de manchon (14).

7. Elément de support selon la revendication 6,
caractérisé :
en ce que la collerette de liaison (32) est formée d'une seule pièce sur la feuille métallique et, plus particulièrement, constituée à partir de la paroi latérale (20) par pliage sur le réceptacle en forme de manchon (14).

8. Procédé de fabrication d'un élément de support (10), plus particulièrement selon une des revendications 1 à 7, avec un corps de base (12) en une feuille métallique,
selon lequel au moins un réceptacle en forme de manchon (14) est embouti sur le corps de base (12) en ne formant qu'une pièce avec lui et une région de transition (16) est formée entre le réceptacle en forme de manchon (14) et le corps de base (12),
caractérisé :
en ce que la région de transition (16) du réceptacle en forme de manchon (14) est ensuite refoulée et est alors constituée de manière anguleuse,
en ce que, sur le corps de base (12), une paroi latérale coudée vers le haut (20) est constituée, qui est espacée par rapport au réceptacle en forme de manchon (14) et qui entoure celui-ci au moins en partie, une région d'espacement (22) étant ainsi formée, et
en ce que, dans la région d'espacement (22), entre le réceptacle en forme de manchon (14) et la paroi latérale (20), au moins un élément de maintien (30) est disposé, celui-ci reliant en les maintenant le réceptacle en forme de manchon (14) et la paroi latérale (20).
